# EUROPEAN PATENT SPECIFICATION

(11) **EP 3 123 093 B1**
(45) Date of publication and mention of the grant of the patent: **24.07.2019**
(21) Application number: 15768681.7
(22) Date of filing: 20.03.2015
(51) Int. Cl.: F28D 7/10, F16L 7/00, F16L 11/20, F24F 12/00, F28D 7/14, F28F 1/24, F28G 3/04

(54) **TUBULAR COUNTER-CURRENT AIR HEAT EXCHANGER**
ROHRFÖRMIGER GEGENSTROMLUFTWÄRMETAUSCHER
ÉCHANGEUR THERMIQUE TUBULAIRE À AIR À CONTRE-COURANT TUBULAIRE

(30) Priority: 27.03.2014 SE 1450352
(43) Date of publication of application: 01.02.2017
(73) Proprietor: Skorstensbolaget I Stockholm AB, 112 40 Stockholm (SE)
(72) Inventor: VINBERG, Carl-Henrik, S-187 75 Täby (SE)
(74) Representative: Groth & Co. KB
(86) International application number: PCT/SE2015/050333
(87) International publication number: WO 2015/147728

(56) References cited:
- EP-A2- 1 770 250
- CA-A- 1 192 901
- CA-A1- 2 499 865
- DE-A1- 3 230 279
- DE-A1- 10 053 495
- DE-A1- 10 053 495
- GB-A- 2 075 658
- GB-A- 2 075 658
- JP-A- S5 758 086
- JP-A- S5 758 086
- JP-A- 2007 064 514
- JP-A- 2007 064 514
- US-A- 2 362 985
- US-A1- 2013 270 815

## Description

### Technical Field

The present invention relates to tubular counter-current air heat exchangers, which preferably are formed with two concentrically placed cylindrical tubes. More specifically, the invention relates to a heat exchanger as defined in the preamble of claim 1 and as disclosed in JP2007-64514.

### Background of the Invention

In existing buildings, it is a desire to save energy by utilizing heat in the exhaust air to raise the temperature of the supply air. This has previously been provided by the exhaust air heat having been recovered by plate or rotary heat exchanger assemblies standing in an attic, fan room, or another arranged installation site.

By US 6,009,908, a heat exchanger for, among other things, gas turbines is previously known, which consists of an inner tube and an outer tube concentrically placed, which outer tube is provided with axially running walls, which perform the functions of spacing elements between the tubes. However, these walls are an obstacle to circulation of the air around the inner tube, which decreases the efficiency of the heat exchanger.

By EP 2192296, a heat exchanger used in internal combustion engines is known, which heat exchanger consists of an inner tube and an outer tube where the inner tube is permanently provided with a number of radial walls, which form a number of longitudinal ducts through the heat exchanger. Also this heat exchanger blocks a rotating air flow around the inner tube, which contributes to an inferior efficiency of the heat exchanger.

Both these known constructions of heat exchangers are provided with rigid tube walls, which form a number of radial ducts for a fluid, which eliminates the possibility of rotation of the fluid around the inner tube. In addition, the constructions are rigid, which means that they cannot be retrofitted in curved spaces.

By SE 457288, a tubular heat exchanger is previously known, which is provided with helically shaped wires on the outside of a carrier tube, which wires aim at improving the heat transfer between the surrounding fluid and the fluid inside the tube. The heat exchanger according to this publication is intended for a fluid heat carrier, i.e., a liquid. The wires are attached to the carrier tube by soldering or welding. This tubular heat exchanger lacks an outer concentrically placed tube, which means that the helically shaped wires cannot define the position of the carrier tube but the position of the heat exchanging inner tube has to be fixed in another way.

Also other types of similar tubular heat exchangers, which are provided with wires wound around the tube to increase the heat-absorbing surface are known, for instance by US 877252, for use in vehicle applications for cooling medium in liquid phase.

The problems of said previously known heat exchangers are that they are not suitable for retrofitted ventilation air change in housing where a high efficiency as regards the temperature in the air change is desirable and where the inner tube should be oriented in relation to an outer tube.

### The Object of the Invention

The object of the invention is to solve said problems by providing an air heat exchanger in the form of two tubular ducts placed in each other in a simple way where the inner tube is distanced from the outer tube and which air heat exchanger has a relatively high efficiency.

The object is furthermore that the inner tube should be possible to be distanced from the outer tube also when the heat exchanger changes the direction of extension.

The object is furthermore to provide a heat exchanger for heat exchange over a relatively long distance, which also may be curved in different directions.

The object is to be able to, in a simple way, retrofit such a heat exchanger in a building.

The object is to be able to retrofit such heat exchangers in existing exhaust-air ducts in order not to occupy installation space from attic storeys, storerooms, and cellarages.

In addition, the object is to easily be able to dismount such an air heat exchanger for, among other things, cleaning.

A further object is to be able to provide a cleaning of the heat exchanger when the same is mounted.

fluid heat carrier, i.e., a liquid. The wires are attached to the carrier tube by soldering or welding. This tubular heat exchanger lacks an outer concentrically placed tube, which means that the helically shaped wires cannot define the position of the carrier tube but the position of the heat exchanging inner tube has to be fixed in another way.

Also other types of similar tubular heat exchangers, which are provided with wires wound around the tube to increase the heat-absorbing surface are known, for instance by US 877252, for use in vehicle applications for cooling medium in liquid phase.

The document JP 2007064514 discloses a heat transfer tube for a heat exchanger with a fin structural body comprised of a coil spring formed by winding a metallic wire with a flat cross sectional shape which contacts an inner circumferential wall surface of the heat transfer tube.

The problems of said previously known heat exchangers are that they are not suitable for retrofitted ventilation air change in housing where a high efficiency as regards the temperature in the air change is desirable and where the inner tube should be oriented in relation to an outer tube.

### The Object of the Invention

The object of the invention is to solve said problems by providing an air heat exchanger according to claim 1.

The object is furthermore that the inner tube should be possible to be distanced from the outer tube also when the heat exchanger changes the direction of extension.

The object is furthermore to provide a heat exchanger for heat exchange over a relatively long distance, which also may be curved in different directions.

The object is to be able to, in a simple way, retrofit such a heat exchanger in a building.

The object is to be able to retrofit such heat exchangers in existing exhaust-air ducts in order not to occupy installation space from attic storeys, storerooms, and cellarages.

In addition, the object is to easily be able to dismount such an air heat exchanger for, among other things, cleaning.

A further object is to be able to provide a cleaning of the heat exchanger when the same is mounted.

### Summary of the Invention

By the present invention, as the same appears in the independent claims, the above-mentioned objects are met wherein said disadvantages have been eliminated. Suitable embodiments of the invention are defined in the dependent claims.

The invention concerns a heat exchanger, which recovers heat of the exhaust air from primarily the exhaust air of the kitchen, bathroom, and water closet. In cooking, extra recovery is afforded when hot fumes of cooking are pressed out through the kitchen fan and being converted into supply air heat. Heat recovery is also provided to the apartment by preheated supply air, which, not the least during the winter half, decreases cost of heating and penetration of cold air into the dwelling. When the kitchen fan is switched off, a so-called X-24 valve opens and performs basic ventilation of the kitchen as well as exhausts the last of the fumes of cooking/fat particles between the fan and the ceiling of the kitchen. Since a directly connected kitchen fan presses out up to 100 l of fumes of cooking per second, air is flowing from the other rooms toward the kitchen, which efficiently prevents the spread of fumes of cooking.

More specifically, the invention concerns a counter-current air heat exchanger comprising an outer tube for a first air current and an inner tube for a counter-directed second air current, which inner tube is placed inside the outer tube. Even if the heat exchanger has been indicated as a counter-current air heat exchanger, it may also be used for heat exchange with co-directed air current. The inner tube is placed at a distance to the outer tube, which distance is defined by resilient spacer means placed and attached only to and along the outer surface of the inner tube so that the inner tube together with the spacer means can both be axially displaced and rotated in relation to the outer tube without the tubes upon said movement being brought in contact with each other. The outer tube may be a dedicated outer tube for the air heat exchanger, which outer tube is adapted to, together with the inner tube and the spacer means thereof, be mounted in an exhaust-air duct in a building. The outer tube may alternatively be an existing exhaust-air duct in a building, the spacer means of the inner tube being dimensioned for co-operating with the inner surface of the exhaust-air duct. Also such an embodiment allows a curvature of the heat exchanger in order to be installed in curved air ducts. Also the cleansing function is obtained by such an embodiment.

In one embodiment of the air heat exchanger, the smallest distance D between the inner dimension My of the outer tube and the outer dimension Mi of the inner tube 0,3Mi < D < 2,5Mi, preferably D=0,5Mi, wherein Mi=My-2D. These dimensions of the diameters of the tubes have been found to give a good heat exchange between the supply air and the exhaust air through the heat exchanger.

In one embodiment of the air heat exchanger, the inner tube is manufactured from a flexible material in order to be bendable inside and with the same curvature as an outer tube being a ventilation duct that does not need to be a part of the retrofitted heat exchanger.

In one embodiment of the air heat exchanger, the outer tube is manufactured from a flexible material in order to be bendable inside and with the same curvature as a ventilation duct situated externally around the outer tube. In this embodiment, however, the heat exchanger comprises both the inner tube and the outer tube.

The expression "flexible material" in these embodiments comprises in addition to smooth tubes of polymeric materials also corrugated metal tubes and plastic tubes, which may be bent in different directions. Such corrugated tubes obtain a surface-enlarging effect, which increases the turbulence and thereby the heat transfer in the tubes. Also a combination of corrugated and smooth tubes in the same heat exchanger is conceivable within the scope of the invention.

In one embodiment of the air heat exchanger, the inner tube is cylindrically shaped and also the outer tube is cylindrically shaped and furthermore the inner tube is placed in a distanced position by said spacing devices in relation to the outer tube. In previously indicated embodiments, the tubes may have different cross-sections, for instance rectangular, quadratic, or oval. Also a mixture of cross-sections between the inner tube and the outer tube is feasible, for instance a cylindrical inner tube in an outer tube having a rectangular cross-section.

In one embodiment of the air heat exchanger, the length Li of the inner tube and the length Ly of the outer tube are equal, and that 50My ≤ Li ≤ 200My. In case of an outer tube of 125 mm, this implies a length of the heat exchanger of between 6,25 m to 25 m. Usual lengths of the heat exchanger are judged to be 7-20 m in entirely vertical installations.

In one embodiment of the air heat exchanger, said spacer means are formed as wave-shaped spring wires radially oriented between the inner and the outer tube and extending at least along one or more parts of the length Li of the inner tube, preferably along its entire length. This embodiment obtains the greatest possible flow through the heat exchanger but gives somewhat inferior cleaning properties than the other embodiments.

In one embodiment of the air heat exchanger, said spacer means are formed as, preferably three, elongate cylindrical brushes, which extend either parallel to or helically around the inner tube. This embodiment gives the best cleaning function of the embodiments shown but acts slightly limiting on the flow through the heat exchanger.

According to the invention, said spacer means are formed as resilient brush bundles placed in groups, preferably in groups of three brush bundles in each group. These brush bundles may be combined with an inner anchor ring or another fixing point to the inner tube which is connected by wire means/attaching wires to the fastening ring of the brush bundles. In such a design, the outside of the inner tube is cleansed by the brush bundles when the inner tube is rotated to the extended position of the attaching wires. When the attaching wires have reached their extended position, the fastening ring of the brush bundles rotates along in the rotation of the inner tube and cleanses the inside of the outer tube. After cleansing operation, detached contamination is removed by a fan. In this way, the heat exchange zone can be cleaned without axial dismounting of the heat exchanger. Quick-fastened seals at both ends of the inner tube and a distance of at least half the mutual brush distance to the first brush bundles as seen from the outer ends allow an axial movement in connection with the cleansing, which allows that the entire heat exchange surfaces can be cleaned also with distanced brush bundles.

In one embodiment of the air heat exchanger, said spacer means or groups of spacer means are equidistantly placed along the inner tube, i.e., they are placed at mutually equal distances from each other along the inner tube.

Common to all embodiments is that the spacer means are resilient, which means that the centring of the inner tube in the outer tube can vary along the heat exchanger, but simultaneously constitutes a distanced position and aims in this connection at a centred position. This is of great importance upon installation of the heat exchanger in curved ducts where the resilience means that the inner tube can approach the outer tube at the bends.

The tubes/ducts have a length of commonly 7-25 m and the efficiency at the length 11 m has been measured to about 90 %.

The outer tube may either be an existing ventilation duct or be a separate extra tube. In case the outer tube consists of an existing ventilation duct, embodiments advantageously having brush-shaped spacer means are used in order to be able to cleanse the outer duct by pulling and turning the inner tube provided with the spacer means. Such a cleansing is completed by sucking/blowing out loose particles by a fan.

This cleansing function is also important for the embodiments shown by the fact that the inner tube together with the spacer means can be both displaced longitudinally and turned to provide a scraping or brushing function of the spacer means against the inner surface of the outer tube.

The cleansing function of the heat exchanger comprises a quick-coupling for the inner tube in the outer tube, which quick-coupling is placed at the respective ends of the heat exchanger. In case brush distances are of full-length type along the heat exchanger tube, the end seals may also be of slide bearing and/or ball bearing type, and also with gland, wherein detaching of the heat exchanger tube is not required for a rotary or axial cleansing operation.

### Brief Description of the Drawings

Now, the invention will be described in more detail, references being made in connection with the accompanying drawing figures. All drawing figures are only schematically made to illustrate the invention in the clearest way.
- Figure 1: shows a possible installation of an embodiment of the invention in a ventilation duct.
- Figure 2: shows an end view of a first embodiment not belonging to the invention.
- Figure 3: shows a perspective view from the side having a transparent outer tube according to Figure 2.
- Figure 4: shows an end view of a second embodiment not belonging to the invention.
- Figure 5: shows a perspective view from the side having a transparent outer tube according to Figure 4.
- Figure 6: shows an end view of a third embodiment not belonging to the invention.
- Figure 7: shows a perspective view from the side having a transparent outer tube according to Figure 6.
- Figure 8: shows an end view of a fourth embodiment according to the invention.
- Figure 9: shows a perspective view from the side having a transparent outer tube according to Figure 8.
- Figure 10: shows an end view of a fifth embodiment according to the invention.
- Figure 11: shows a perspective view from the side having a transparent outer tube according to Figure 10.

### Description of the Invention

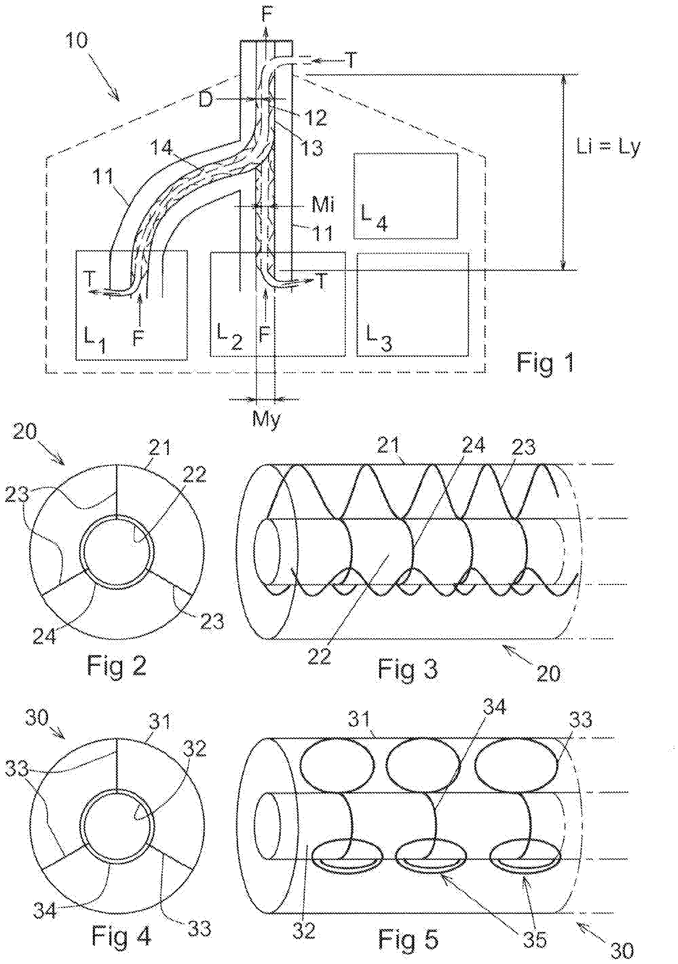

Figure 1 shows a block of flats or apartment house 10 provided with regular ventilation ducts 11 for exhaust air F, which via a fan system, not shown, transports out used air from kitchens, bathrooms, and WC rooms. These regular ventilation ducts 11 may either be straight, usually vertical in their extension, or be curved in some way to deflect to a plurality of flats or apartments L₁, L₂, L₃ L₄. According to the present invention, there is provided a heat exchange of the indoor air of the building wherein incoming supply air T is supplied to the building through a central supply air duct 12 while the heated exhaust air F is evacuated through a surrounding exhaust-air duct 13. The fan for the air current may be a pressure fan from flats or a suction fan mounted at the roof or the like. The supply air duct 12 is held distanced in relation to the exhaust-air duct 13 by spacer means 14. As is seen in the figure, the vertical length Ly of the heat exchanger is considerably greater than its outer diameter My. The difference may be up to a factor 200 or in certain installations even more. If then the heat exchanger is curved as is also shown in the figure, the factor of its total length may double,

Figure 2 shows in end view a first embodiment not belonging to the invention of a tubular air heat exchanger 20 consisting of an outer tube 21 and an inner tube 22, which tubes in this embodiment are concentrically arranged. The figure shows circular-cylindrical tubes, but also other cross-sectional profiles are feasible within the scope of the invention. For instance, the tubes may be quadratic, rectangular, or have an elliptical cross-section. Also combinations of cross-sections of the tubes are feasible. Common to all embodiments is, however, that the air heat exchanger 20 is provided with one or more spacer means 23, which hold the outer surface of the inner tube 22 at a distance from the inner surface of the outer tube. The figure shows that the longitudinal axes of the tubes coincide, i.e., that the tubes are concentric, but this is, however, not necessary even if it is desirable. The figure shows three separate spacer means 23, which are held fixed around the inner tube 22 by holder means 24, which may be formed as tying wires, cable ties, tube clips, or the like, which all extend around the periphery of the entire inner tube 22. The spacer means 23 are equiangularly distributed around the inner tube 22, which in the embodiment illustrated corresponds to 120°. The number of spacer means may in other variants of the embodiment be 4-6, which at uniform pitch corresponds to 90°, 72° and 60° between each spacer means.

Figure 3 shows an end of the air heat exchanger 20 in perspective. In order to make the spacer means 23 visible, the outer tube 21 has been illustrated as transparent, which has been made for the sake of clarity. The spacer means 23 are made as wave-shaped resilient metal wires, which on one hand rest against the inner surface of the outer tube 21 and on the other hand against the outer surface of the inner tube 22. The metal wires are held in place by being mounted on the inner tube 22 by holder means 24 formed as tying wires, cable ties, tube clips, or the like according to the above. The mounting of the air heat exchanger 20 is carried out by the inner tube 22 first being provided with the spacer means 23 and then being pressed or pulled into the outer tube 21 so that the inner tube is held at a distance from the outer tube.

Figure 4 shows in end view a second embodiment not belonging to the invention of a tubular air heat exchanger 30 consisting of an outer tube 31 and an inner tube 32, which tubes in this embodiment are concentrically arranged. The mutual position of the tubes and their respective cross-sectional shapes may be formed and varied in a similar way for all embodiments described. This embodiment is formed with spacer means 33 in the form of resilient metal rings directed essentially radially out from the inner tube 32. The spacer means 33 are attached on the inner tube 32 by holder means 34 formed in a similar way as has been described under the first embodiment, i.e., using tying wires, cable ties, tube clips, or the like. In order for these spacer means to retain a radial direction between the two tubes, they may be formed as resilient straps, which have a flat abutment surface against the surfaces of the two tubes. An alternative design is that the spacer means 33 only have a wider strap-shaped surface where they abut against the inner tube 32 where they are held fixed by the holder means 32 while, at the abutment against the outer tube 31, they have a wire-shape.

Figure 5 shows one end of the air heat exchanger 30 in perspective. In order to make the spacer means 33 visible, the outer tube 31 has been illustrated as transparent, which has been made for the sake of clarity. Correspondingly as has been described above, the spacer means 33 have been mounted in place around the inner tube 32 by holder means 34. In this embodiment, the spacer means 33 are placed as groups 35 around the inner tube 32 with three spacers in the same group. In each group 35, the spacers are three in number and are placed radially out from the inner tube at an angle of 120° between each adjacent spacer, the spacers of a group being located essentially in the same radial plane. Preferably, the groups 35 are equidistantly placed along the inner tube 32, which implies that it is the same axial distance between each group.

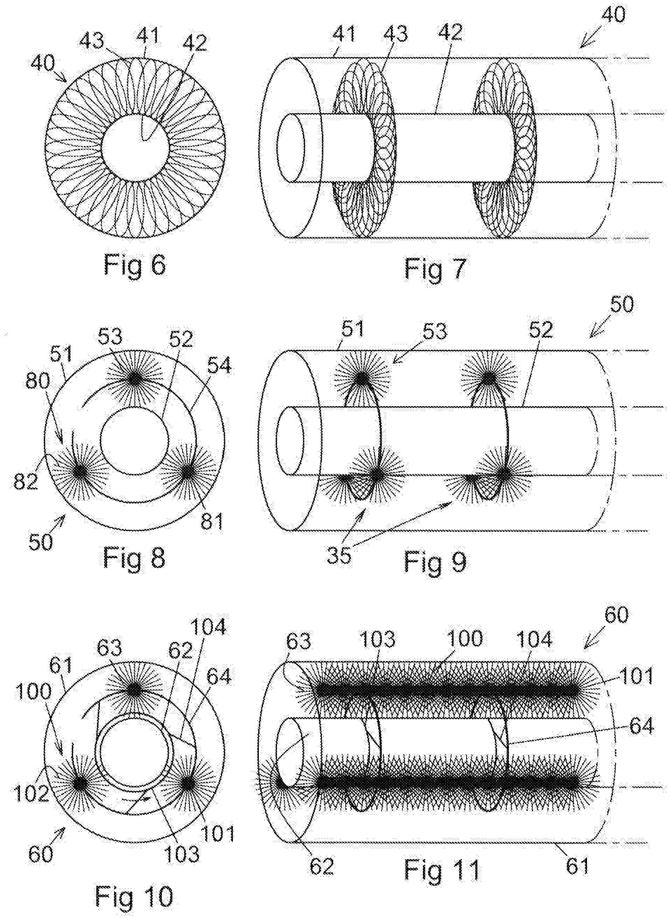

Figure 6 shows in end view a third embodiment not belonging to the invention of a tubular air heat exchanger 40 consisting of an outer tube 41 and an inner tube 42, which tubes in this embodiment are concentrically arranged. The mutual position of the tubes and their respective cross-sectional shapes may be formed and varied in a similar way for all embodiments described. This embodiment is formed with spacer means 43 in the form of a helical spring having a diameter which corresponds to the radial distance between the inner tube 42 and the outer tube 41 when the centre axes of the tubes coincide with each other. The helical springs are connected to the inner tube by their respective spring tensions arising when the helical springs are forced over the inner tube 42. Also these helical springs are preferably placed at equidistant distance from each other.

Figure 7 shows a side view of the heat exchanger 40 in perspective where the outer tube 41 and the inner tube 42 are concentrically fixed in each other by the spacer means 43 being clamped on the inner tube 42 and abutting against the inner surface of the outer tube 41.

Figure 8 shows in end view a fourth embodiment according to the invention of a tubular air heat exchanger 50 consisting of an outer tube 51 and an inner tube 52, which tubes in this embodiment are concentrically arranged. The mutual position of the tubes and their respective cross-sectional shapes may be formed and varied in a similar way for all embodiments described. This embodiment is formed with spacer means 53 in the form of resilient spherical cushions 80. The spacer means 53 are attached around the inner tube 52 by holder means 54 formed as a ring-shaped clamp, which is connected to a sphere centre 81 of the spacer means 53. The clamp may be open as is shown in the figure or entirely closed. From the sphere centre 81 of the spacer means 53, steel springs 82 extend radially outward for the formation of the spherical cushion 80. The spacer means 53 in this embodiment may also be formed as disc-shaped cushions, which are joined in the middle and which are directed outward at the periphery.

Figure 9 shows a side view in perspective of the heat exchanger 50 according to the fourth embodiment with the outer tube 51 and the inner tube 52 which is provided with the spacer means 53. Also in this embodiment, the spacer means 53 are placed as groups 35 around the inner tube 52 with three spacers in the same group. The spacers are three in number in each group 35 and are placed between the inner tube and the outer tube at an angle of 120° between each adjacent spacer, the spacers of a group being located essentially in the same radial plane. Preferably, the groups 35 are placed equidistantly along the inner tube 52, which implies that it is the same axial distance between each group.

For the embodiments shown in Figures 5, 7 and 8, suitable equidistances between each group of spacer means are about 50 cm.

Figure 10 shows in end view a fifth embodiment according to the invention of a tubular air heat exchanger 60 consisting of an outer tube 61 and an inner tube 62, which tubes in this embodiment are concentrically arranged. This embodiment is formed with spacer means 63 in the form of resilient cylindrical brushes 100. The spacer means 63 are attached around the inner tube 62 by holder means 64 formed as a ring-shaped clamp, which is connected to a brush centre 101 of the spacer means 63. The clamp may be open, as shown in the figure, or entirely closed. From the brush centre 101 of the spacer means 63, steel springs 102 extend radially outward from the brush centre for the formation of the cylindrical brush 100. In this embodiment, the holder means 64 has been connected to an inner anchor ring 103, which is attached around the inner tube 62. The anchor ring 103 is provided with a number of wire means 104, in the figure three in number, which are attached to the holder means 64. Each wire means is longer than the radial distance between the anchor ring 103 and the holder means 64 so that a rotation of the inner tube 62 gets a lagging effect of the resulting rotation of the holder means and the spacer means 63 connected to the same according to the direction of the arrow. A corresponding lagging effect is obtained when the rotation changes direction. The length of each wire means 104 is adapted to how large angular rotation of the inner tube that is desired for the brushing effect against the inner tube. In this connection, the rotation is used to clean both the outside of the inner tube and the inside of the outer tube. Thus, a brushing effect is obtained by the inner tube when the wire means are slack while a brushing effect is obtained for the inside of the outer tube when the wire means pull along the holder means and the spacer means 63, i.e., the brushes.

Figure 11 shows a side view in perspective of the heat exchanger 60 according to the fifth embodiment with the outer tube 61 and the inner tube 62 which is provided with the spacer means 63. The spacer means are formed as elongate cylindrical brushes 100 with said brush centre 101 to which said holder means 64 are connected in order to, by spring action, hold the spacer means fixed against the inner tube 62. In the figure, also the anchor ring 103 and the wire means 104 between the anchor ring 103 and the holder means 64 are shown.

The embodiments in Figures 8-11 show spacer means, which with their holder means 54, 64 are attached to the inner tube by the holder means 54, 64, by spring action, clamping around the inner tube. Also the anchor ring design for the connection of the spacer means to the inner tube shown in Figures 10-11 is applicable to the embodiment shown in Figures 8-9.

## Claims

1. Counter-current air heat exchanger (20, 30, 40, 50, 60) comprising an outer tube (11, 21, 31, 41, 51, 61) for a first air current and an inner tube (22, 32, 42, 52, 62) manufactured from a flexible material for a counter-directed second air current, which inner tube is placed inside the outer tube, the inner tube being placed at a distance to the outer tube, which distance is defined by spacer means (43, 53, 63) placed and attached only to and along the outer surface of the inner tube so that the inner tube together with the spacer means can both be axially displaced and rotated in relation to the outer tube without the tubes upon said movement being brought in contact with each other, wherein the spacer means (43, 53, 63) are resilient to allow the centring of the inner tube in the outer tube to vary along the heat exchanger, but simultaneously hold the inner tube (22, 32, 42, 52, 62) in a distanced position, and that the inner tube (22, 32, 42, 52, 62) aims at a centred position the heat exchanger being **characterized in that** said spacer means (63) are formed as, preferably three, elongate cylindrical brushes (100), which extend either parallel to or helically around the inner tube (62) or **in that**
said spacer means (53) are formed as resilient brush bundles placed in groups, preferably in groups (35) of three brush bundles in each group.

2. Heat exchanger (20, 30, 40, 50, 60) according to claim 1, **characterized in that** the smallest distance D between the inner dimension My of the outer tube (11, 21, 31, 41, 51, 61) and the outer dimension Mi of the inner tube (22, 32, 42, 52, 62) is 0,3Mi < D < 2,5Mi, preferably D=0,5Mi, wherein Mi=My-2D.

3. Heat exchanger (20, 30, 40, 50, 60) according to any one of claims 1-2, **characterized in that** the outer tube (11, 21, 31, 41, 51, 61) is a ventilation duct.

4. Heat exchanger (20, 30, 40, 50, 60) according to any one of claims 1-3, **characterized in that** the outer tube (21, 31, 41, 51, 61) is manufactured from a flexible material to be bendable inside and with the same curvature as a ventilation duct (11) situated externally around the outer tube.

5. Heat exchanger (20, 30, 40, 50, 60) according to any one of claims 1-4, **characterized in that** the inner tube is cylindrically shaped and the outer tube (21, 31, 41, 51, 61) is cylindrically shaped, and that the inner tube (22, 32, 42, 52, 62) is placed in a distanced position by said spacing devices in relation to the outer tube (21, 31, 41, 51, 61).

6. Heat exchanger (20, 30, 40, 50, 60) according to any one of claims 2-5, **characterized in that** the length Li of the inner tube (22, 32, 42, 52, 62) and the length Ly of the outer tube (21, 31, 41, 51, 61) are equal, and that 50My ≤ Li ≤ 200My.

## Patentansprüche

1. Gegenstromluftwärmetauscher (20, 30, 40, 50, 60), umfassend eine äußere Leitung (11, 21, 31, 41, 51, 61) für einen ersten Luftstrom und eine aus einem flexiblen Material hergestellte innere Leitung (22, 32, 42, 52, 62) für einen entgegengesetzten zweiten Luftstrom, wobei die innere Leitung in der äußeren Leitung angeordnet ist, wobei die innere Leitung in einem Abstand zu der äußeren Leitung angeordnet ist, wobei der Abstand durch Abstandsmittel (43, 53, 63) bestimmt ist, die nur an und entlang der äußeren Fläche der inneren Leitung derart angeordnet und angebracht sind, dass die innere Leitung zusammen mit den Abstandsmitteln sowohl axial verschiebbar als auch drehbar in Relation zu der äußeren Leitung ist, ohne dass die Leitungen bei der Bewegung in Kontakt miteinander gebracht werden, wobei die Abstandsmittel (43, 53, 63) elastisch sind, um zu ermöglichen, dass das Zentrieren der inneren Leitung in der äußeren Leitung entlang des Wärmetauschers variiert, jedoch gleichzeitig die innere Leitung (22, 32, 42, 52, 62) in einer beabstandeten Position gehalten wird, und dass die innere Leitung (22, 32, 42, 52, 62) einer zentrierten Position zustrebt, wobei der Wärmetauscher **dadurch gekennzeichnet ist, dass**
die Abstandsmittel (63) als, vorzugsweise drei, längliche zylindrische Bürsten (100) ausgebildet sind, die sich entweder parallel zu oder spiralförmig um die innere Leitung (62) erstrecken, oder dass
die Abstandsmittel (53) als elastische Bürstenpakete ausgebildet sind, die in Gruppen, vorzugsweise in Gruppen (35) von drei Bürstenpaketen pro Gruppe, angeordnet sind.

2. Wärmetauscher (20, 30, 40, 50, 60) nach Anspruch 1, **dadurch gekennzeichnet, dass** der kleinste Abstand D zwischen der Innenabmessung My der äußeren Leitung (11, 21, 31, 41, 51, 61) und der Außenabmessung Mi der inneren Leitung (22, 32, 42, 52, 62) 0,3Mi < D < 2,5Mi, vorzugsweise D = 0,5Mi, ist, wobei Mi = My - 2D.

3. Wärmetauscher (20, 30, 40, 50, 60) nach einem der Ansprüche 1-2, **dadurch gekennzeichnet, dass** die äußere Leitung (11, 21, 31, 41, 51, 61) ein Belüftungskanal ist.

4. Wärmetauscher (20, 30, 40, 50, 60) nach einem der Ansprüche 1-3, **dadurch gekennzeichnet, dass** die äußere Leitung (21, 31, 41, 51, 61) aus einem flexiblen Material, um innen biegsam zu sein, und mit derselben Krümmung wie ein extern um die äußere Leitung angeordneter Belüftungskanal (11) hergestellt ist.

5. Wärmetauscher (20, 30, 40, 50, 60) nach einem der Ansprüche 1-4, **dadurch gekennzeichnet, dass** die innere Leitung zylindrisch geformt ist und die äußere Leitung (21, 31, 41, 51, 61) zylindrisch geformt ist, und dass die innere Leitung (22, 32, 42, 52, 62) durch die Abstandsvorrichtungen in einer in Relation zu der äußeren Leitung (21, 31, 41, 51, 61) beabstandeten Position angeordnet ist.

6. Wärmetauscher (20, 30, 40, 50, 60) nach einem der Ansprüche 2-5, **dadurch gekennzeichnet, dass** die Länge Li der inneren Leitung (22, 32, 42, 52, 62) und die Länge Ly der äußeren Leitung (21, 31, 41, 51, 61) gleich sind und dass 50My ≤ Li ≤ 200My.

## Revendications

1. Echangeur de chaleur à air à contre-courant (20, 30, 40, 50, 60) comprenant un tube extérieur (11, 21, 31, 41, 51, 61) pour un premier courant d'air et un tube intérieur (22, 32, 42, 52, 62) fabriqué à partir d'un matériau flexible pour un second courant d'air en sens opposé, lequel tube intérieur est placé à l'intérieur du tube extérieur, le tube intérieur étant placé à une certaine distance du tube extérieur, laquelle distance est définie par des moyens d'espacement (43, 53, 63) placés et attachés uniquement à et le long de la surface extérieure du tube intérieur de telle sorte que le tube intérieur de concert avec les moyens d'espacement puissent tous les deux être déplacés axialement et mis en rotation par rapport au tube extérieur sans que les tubes lors dudit déplacement soient mis en contact l'un avec l'autre, dans lequel les moyens d'espacement (43, 53, 63) sont élastiques de manière à permettre que le centrage du tube intérieur dans le tube extérieur varie le long de l'échangeur de chaleur, mais en maintenant simultanément le tube intérieur (22, 32, 42, 52, 62) dans une position distante, et que le tube intérieur (22, 32, 42, 52, 62) vise une position centrée, l'échangeur de chaleur étant **caractérisé en ce que**:
lesdits moyens d'espacement (63) se présentent sous la forme de préférence de trois balais cylindriques allongés (100), qui s'étendent soit parallèlement au tube intérieur (62) soit de façon hélicoïdale autour de celui-ci, ou **en ce que**
lesdits moyens d'espacement (53) se présentent sous la forme de faisceaux de balais élastiques disposés par groupes, de préférence par groupes (35) de trois faisceaux de balais dans chaque groupe.

2. Echangeur de chaleur (20, 30, 40, 50, 60) selon la revendication 1, **caractérisé en ce que** la plus petite distance D entre la dimension intérieure My du tube extérieur (11, 21, 31, 41, 51, 61) et la dimension extérieure Mi du tube intérieur (22, 32, 42, 52, 62) est 0,3 Mi < D < 2,5 Mi, de préférence D = 0,5 Mi, dans lequel Mi = My-2D.

3. Echangeur de chaleur (20, 30, 40, 50, 60) selon l'une quelconque des revendications 1 et 2, **caractérisé en ce que** le tube extérieur (11, 21, 31, 41, 51, 61) est un conduit de ventilation.

4. Echangeur de chaleur (20, 30, 40, 50, 60) selon l'une quelconque des revendications 1 à 3, **caractérisé en ce que** le tube extérieur (21, 31, 41, 51, 61) est fabriqué à partir d'un matériau flexible de manière à pouvoir être courbé dans un conduit de ventilation (11) situé extérieurement autour du tube extérieur et avec la même courbure que celui-ci.

5. Echangeur de chaleur (20, 30, 40, 50, 60) selon l'une quelconque des revendications 1 à 4, **caractérisé en ce que** le tube intérieur est de forme cylindrique et le tube extérieur (21, 31, 41, 51, 61) est de forme cylindrique, et **en ce que** le tube intérieur (22, 32, 42, 52, 62) est placé dans une position distante par lesdits dispositifs d'espacement par rapport au tube extérieur (21, 31, 41, 51, 61).

6. Echangeur de chaleur (20, 30, 40, 50, 60) selon l'une quelconque des revendications 2 à 5, **caractérisé en ce que** la longueur Li du tube intérieur (22, 32, 42, 52, 62) et la longueur Ly du tube extérieur (21, 31, 41, 51, 61) sont égales, et **en ce que** 50 My ≤ Li ≤ 200 My.
